(19) 

Europäisches Patentamt

European Patent Office

Office européen des brevets

(11) **EP 4 683 241 A1**

(12) **EUROPEAN PATENT APPLICATION**

(43) Date of publication:
**21.01.2026 Bulletin 2026/04**

(21) Application number: **25189483.8**

(22) Date of filing: **15.07.2025**

(51) International Patent Classification (IPC):
**H04B 7/06** (2006.01)

(52) Cooperative Patent Classification (CPC):
**H04B 7/0617**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **18.07.2024 FI 20245901**

(71) Applicant: **Nokia Solutions and Networks Oy 02610 Espoo (FI)**

(72) Inventors:
- **RANINEN, Elias Aksel**
  **Espoo (FI)**
- **HONKALA, Mikko Johannes**
  **Espoo (FI)**
- **KORPI, Dani Johannes**
  **Tampere (FI)**
- **HUTTUNEN, Janne Matti Juhani**
  **Espoo (FI)**

(74) Representative: **Nokia EPO representatives Nokia Technologies Oy Karakaari 7 02610 Espoo (FI)**

(54) **METHOD AND APPARATUS FOR RECEIVER TRAINING**

(57)     A method, comprising generating (102) from a transmit waveform a received signal corresponding to a first antenna array with a first number of receive antennas, wherein the generated received signal substantially corresponds to a received signal of a second antenna array with a second number of receive antennas, wherein the first number is smaller than the second number by carrying out at least one of the following: adjusting (103) first antenna array inter-element spacings, adjusting (104) effective channel gain, and carrying out (105) a decorrelation transformation to approximate beamforming.

## Fig. 1

```
101. Transmit waveform

102. Generate received signal
    103. Adjust spacing
    104. Adjust gain
    105. Decorrelation transformation

106. Received signal for first array corresponding to second array
```

**Description**

**TECHNICAL FIELD**

Various example embodiments relate to machine learning algorithms for receivers and their training.

**BACKGROUND**

This section illustrates useful background information without admission of any technique described herein representative of the state of the art.

Present disclosure provides some solutions related to machine learning algorithms for receivers and their training.

**SUMMARY**

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first example aspect, there is provided a method, comprising generating from a transmit waveform a received signal corresponding to a first antenna array with a first number of receive antennas, wherein the generated received signal substantially corresponds to a received signal of a second antenna array with a second number of receive antennas, wherein the first number is smaller than the second number by carrying out at least one of the following:

adjusting first antenna array inter-element spacings,
adjusting effective channel gain, and
carrying out a decorrelation transformation to approximate beamforming, wherein carrying out the decorrelation transformation to approximate beamforming comprises a decorrelation transformation without dimensionality reduction to approximately match the non-correlated statistics of the beamformed second antenna array.

In some example embodiments of the first aspect, the method further comprises producing a random transmit bit sequence; and
generating the transmit waveform based on the random transmit bit sequence.

In some example embodiments of the first aspect, the method further comprises orthogonal frequency division multiplexing, OFDM, demodulation of the received signal.

In some example embodiments of the first aspect, the method further comprises inputting the received signal into a machine learning receiver model for a forward pass followed by a loss calculation.

In some example embodiments of the first aspect, the method further comprises updating parameters of the machine learning receiver model based on the loss calculation.

In some example embodiments of the first aspect, adjusting the antenna array inter-element spacings comprises defining the first antenna array configuration in such a way that it approximately corresponds to the physical size of the second antenna array.

In some example embodiments of the first aspect, the second antenna array comprises a uniform antenna array and adjusting the first antenna array inter-element spacings comprises defining the first antenna array in a uniform configuration with substantially even inter-element spacings in such a way that it approximately corresponds to the physical size of the second antenna array.

In some example embodiments of the first aspect, the second antenna array comprises a non-uniform antenna array and adjusting the first antenna array inter-element spacings comprises defining the first antenna array in a non-uniform configuration in such a way that it approximately corresponds to the physical size of the second antenna array.

In some example embodiments of the first aspect, adjusting the effective channel gain comprises adjusting to approximately match the channel gain of the second antenna array.

In some example embodiments of the first aspect, adjusting the effective channel gain comprises adjusting the channel gain scaling the channel matrix or noise variance by a factor depending on the first number and the second number.

According to a second example aspect, there is provided an apparatus, comprising:

at least one processor; and
at least one memory including instructions that, when executed by the at least one processor, cause the apparatus at least to:

generate from a transmit waveform a received signal corresponding to a first antenna array with a first number of receive antennas, wherein the generated received signal substantially corresponds to a received signal of a second antenna array with a second number of receive antennas, wherein the first number is smaller than the second number by carrying out at least one of the following:

adjust first antenna array inter-element spacings,
adjust effective channel gain, and
carry out a decorrelation transformation to approximate beamforming, wherein carrying out the decorrelation transformation to approximate beamforming comprises a decorrelation transformation without dimensionality reduction to approximately match the non-correlated statistics of the beamformed second antenna array.

In some example embodiments of the second aspect, the at least one processor; and the at least one memory are further configured to cause the apparatus at least to

produce a random transmit bit sequence; and
generate the transmit waveform based on the random transmit bit sequence.

In some example embodiments of the second aspect, the at least one processor; and the at least one memory are further configured to cause the apparatus at least to

input the received signal into a machine learning receiver model for a forward pass followed by a loss calculation; and
update parameters of the machine learning receiver model based on the loss calculation.

In some example embodiments of the second aspect, adjusting the antenna array inter-element spacings comprises defining the first antenna array configuration in such a way that it approximately corresponds to the physical size of the second antenna array.

In some example embodiments of the second aspect, adjusting the effective channel gain comprises adjusting to approximately match the channel gain of the second antenna array.

In some example embodiments of the second aspect, adjusting the effective channel gain comprises adjusting the channel gain by scaling the channel matrix or noise variance by a factor depending on the first number and the second number.

According to a third example aspect, there is provided a non-transitory computer readable medium comprising program instructions stored thereon for performing at least the following:

generate from a transmit waveform a received signal corresponding to a first antenna array with a first number of receive antennas, wherein the generated received signal substantially corresponds to a received signal of a second antenna array with a second number of receive antennas, wherein the first number is smaller than the second number by carrying out at least one of the following:

adjust first antenna array inter-element spacings,
adjust effective channel gain, and
carry out a decorrelation transformation to approximate beamforming, wherein carrying out the decorrelation transformation to approximate beamforming comprises a decorrelation transformation without dimensionality reduction to approximately match the non-correlated statistics of the beamformed second antenna array.

According to a fourth example aspect, there is provided a method, comprising

producing a random transmit bit sequence;
generating a transmit waveform based on the random transmit bit sequence;
generating from the transmit waveform a received signal corresponding to a first antenna array with a first number of receive antennas, wherein the generated received signal substantially corresponds to a received signal of a second antenna array with a second number of receive antennas, wherein the first number is smaller than the second number by carrying out at least one of the following:

adjusting first antenna array inter-element spacings,
adjusting effective channel gain, and
carrying out a decorrelation transformation to approximate beamforming;

inputting the received signal into a machine learning receiver model for a forward pass followed by a loss calculation; and

updating parameters of the machine learning receiver model based on the loss calculation.

According to a fifth example aspect, there is provided an apparatus, comprising:

at least one processor; and
at least one memory including instructions that, when executed by the at least one processor, cause the apparatus at least to:

produce a random transmit bit sequence;
generate a transmit waveform based on the random transmit bit sequence;
generate from the transmit waveform a received signal corresponding to a first antenna array with a first number of receive antennas, wherein the generated received signal substantially corresponds to a received signal of a second antenna array with a second number of receive antennas, wherein the first number is smaller than the second number, by carrying out at least one of the following:

adjust first antenna array inter-element spacings,
adjust effective channel gain, and
carry out a decorrelation transformation to approximate beamforming;

input the received signal into a machine learning receiver model for a forward pass followed by a loss calculation; and
update parameters of the machine learning receiver model based on the loss calculation.

According to a sixth example aspect, there is provided an apparatus comprising means for performing the method of any example aspect.

According to an eighth example aspect, there is provided an apparatus comprising circuitry configured to perform the method of any example aspect.

Different non-binding example aspects and embodiments have been illustrated in the foregoing. The embodiments in the foregoing are used merely to explain selected aspects or steps that may be utilized in implementations. Some embodiments may be presented only with reference to certain example aspects of the invention. It should be appreciated that corresponding embodiments may apply to other example aspects as well.

**BRIEF DESCRIPTION OF THE DRAWINGS**

For a more complete understanding of example embodiments, reference is now made to the following descriptions taken in connection with the accompanying drawings in which:

Fig. 1 shows a flow chart of a method of an example embodiment;
Fig. 2 shows a flow chart of a method of an example embodiment;
Fig. 3 shows a flow chart of a method of an example embodiment;
Fig. 4 shows a block diagram of an apparatus of an example embodiment;
Fig. 5A shows a result of a receiver trained with an approximation of an example embodiment; and
Fig. 5B shows a result of a receiver trained without approximation.

**DETAILED DESCRIPTION**

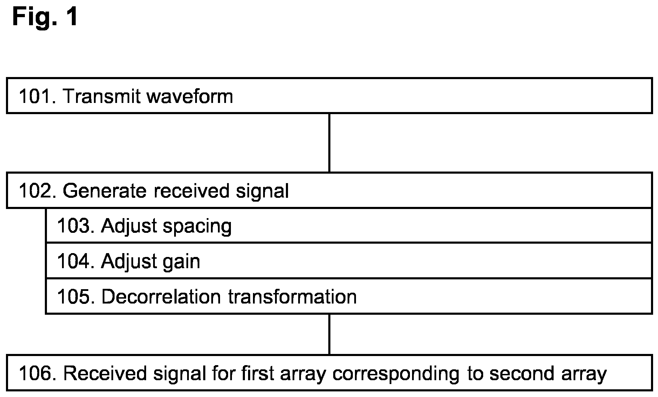

An example embodiment and its potential advantages are understood by referring to Figs. 1 through 4 of the drawings. In this document, like reference signs denote like parts or steps.

Example embodiments of present disclosure propose a method for generating training data that imitates beamformed data from a large antenna array, even though only the small number of beamformed dimensions are simulated. Example embodiments of present disclosure are configured to provide a distribution of the efficiently approximated beamformed data that is s sufficiently close to the full beamforming case so that a performance of a machine learning, ML, model is the same for both training datasets.

Example embodiments of the present disclosure enable approximating beamformed high-dimensional data, high-dimensional referring to a large number of antennas, by sampling low-dimensional data and modifying it in a such way that the approximated data substantially corresponds to the original beamformed high-dimensional data. The low-dimensional data is then used as training data for machine learning receivers in-place of the high-dimensional data.

In an example embodiment, the method of the present disclosure comprises at least one step selected from the following steps to generate the low-dimensional data:

Adjusting antenna array inter-element spacing so that the smaller antenna panel matches the physical dimensions of larger antenna panel, but with fewer elements in order to match the wavelength of the transmissions similarly.

Adjusting the effective channel gain of the smaller antenna panel so that it matches the channel gain of the larger antenna panel.

Carrying out a decorrelation transformation without dimensionality reduction to match the non-correlated statistics of the beamformed large target system.

The example embodiments of the present disclosure are configured to generate $N_k$-dimensional data, $N_k < N_r$, the distribution of which is as close as possible to that of the beamformed $N_r$-dimensional data in an efficient manner.

In an example embodiment, the antenna arrays comprise multiple input multiple output, MIMO, antenna arrays. In an example embodiment, the high-dimensional antenna array comprises a 64x4 MIMO antenna array with 64 receive antennas and 4 transmit antennas. In an example embodiment, the low-dimensional antenna array comprises an 8x4 MIMO antenna array with 8 receive antennas. In an example embodiment, accordingly, $N_k$ is 8 and $N_r$ is 64.

Fig. 1 shows a flow chart of a method of an example embodiment.

At step 101, a transmit waveform is available. In an example embodiment, the transmit waveform is created beforehand.

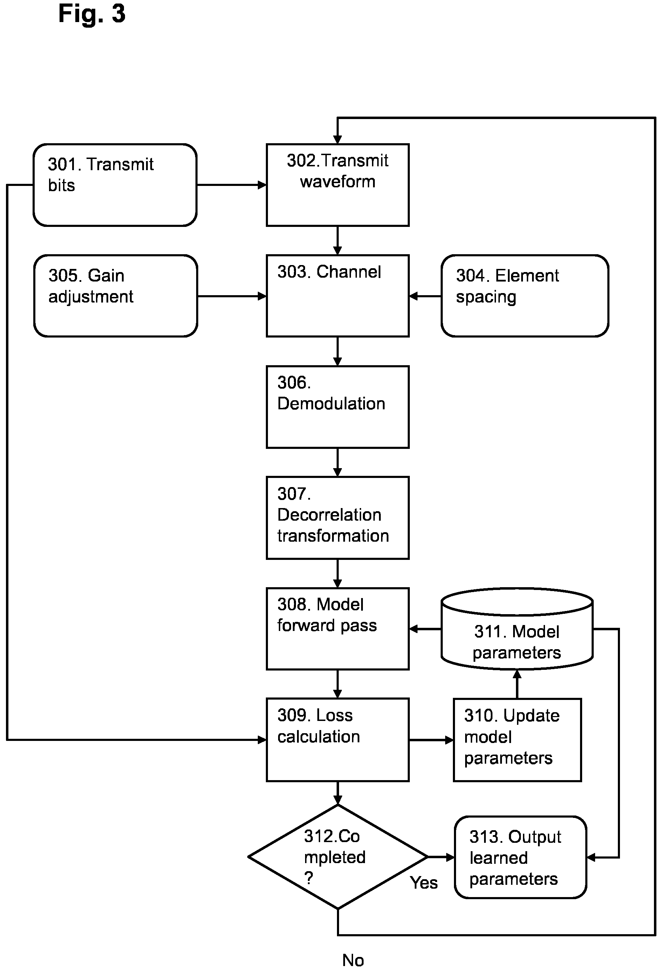

At step 102, a received signal is generated from the transmit waveform. The received signal generated corresponds to a first antenna array with a first number, $N_k$, of receive antennas. In an example embodiment, the received signal is created from the transmit waveform by carrying out at least one of the steps described hereinafter and in more detail with reference to Fig. 3.

At step 103, inter-element spacings of the first antenna array are adjusted. In an example embodiment, adjusting the antenna array inter-element spacings comprises defining the first antenna array configuration in such a way that it approximately corresponds to the physical size of a second antenna array with a second number, $N_r$, of receive antennas.

At step 104, the effective channel gain is adjusted. In an example embodiment, adjusting the effective channel gain comprises adjusting to approximately match the channel gain of the second antenna array. In a further example embodiment, adjusting the effective channel gain comprises adjusting the channel gain by scaling the channel matrix or noise variance by a factor depending on the first number and the second number.

At step 105, a decorrelation transformation to approximate beamforming is carried out. In an example embodiment, the decorrelation transformation comprises a decorrelation transformation without dimensionality reduction to approximately match the non-correlated statistics of the beamformed second antenna array.

At step 106, the received signal has been generated. The generated received signal substantially corresponds to a received signal of a second antenna array, i.e. high-dimensional array, with a second number, $N_r$, of receive antennas, wherein the first number, $N_k$, is smaller than the second number.

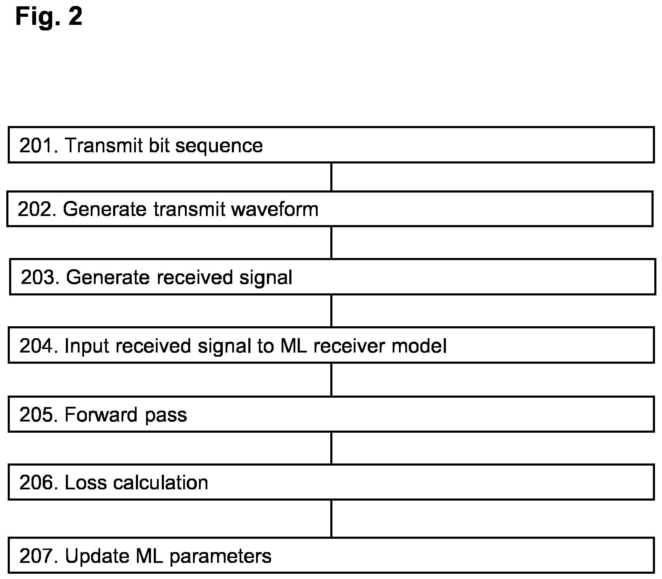

Fig. 2 shows a flow chart of a method of an example embodiment.

At step 201, a random transmit bit sequence is created.

At step 202, a transmit waveform is generated based on the random transmit bit sequence. In an example embodiment, the transmit waveform comprises an orthogonal frequency division multiplexing, OFDM, transmit waveform.

At step 203, a received signal is generated from the transmit waveform as explained hereinbefore with respect to Fig. 1 and will be described in more detail hereinafter with respect to Fig. 3.

At step 204, the generated received signal is input into a machine learning, ML, receiver model. In an example embodiment, the ML receiver model comprises a DeepRx MIMO model.

At step 205, a forward pass is calculated for the machine learning model.

At step 206, a loss calculation is carried out. In an example embodiment, the loss calculation comprises a calculation of binary entropy between the transmit bit sequence and the bit sequence detected by the ML receiver model.

At step 207, the ML receiver model parameters are updated based on the training carried out with the generated received signal. In an example embodiment, the parameters are updated based on a regular stochastic gradient descent-based training process.

Fig. 3 shows a flow chart of a method of an example embodiment.

At step 301, a random transmit bit sequence is created. In a further example embodiment, an existing transmit bit sequence is used instead of or in addition to a random transmit bit sequence.

At step 302, a transmit waveform is generated based on the random transmit bit sequence. In an example embodiment, the transmit waveform comprises an orthogonal frequency division multiplexing, OFDM, transmit waveform.

At step 303, the transmit waveform is fed to a channel model to generate received data approximating a high-dimensional antenna array, comprising the steps according to example embodiments of the present disclosure.

A following model is considered for received data in an antenna array having a second number, $N_r$, of receive antennas

$$y = \sqrt{G}Hx + n \in \mathbb{C}^{N_r},$$

where G > 0 is the large-scale gain, $H \in \mathbb{C}^{N_r \times N_t}$ is the channel matrix normalized so that $\mathrm{E}\left[\|H\|_F^2\right] = \mathrm{E}\left[\mathrm{Tr}\left(H^H H\right)\right] = N_t N_r$, where $N_t$ denotes the number of transmit antennas or layers. Furthermore, $x \in \mathbb{C}^{N_t}$ is the transmitted data, $n \in \mathbb{C}^{N_r}$ is noise with covariance $\mathrm{E}[nn^H] = \sigma^2 I$, where $\sigma^2$ is referred to as the noise variance. The noise $n$ is independent of $H$ and $x$. The transmitted data has the form

$$x = \sqrt{\frac{E_s}{N_t}}Fs,$$

where $E_s = \mathrm{E}[\|x\|^2]$ is the transmit energy per vector symbol, $F$ is a precoding matrix and $s \in \mathbb{C}^{N_s}$ is a vector of transmitted constellation symbols satisfying $\mathrm{E}[ss^H] = I$. It is assumed $F = I$ and $N_s = N_t$, so that $x = \sqrt{\frac{E_s}{N_t}}s$. The covariance of the transmitted data is $R_x = \mathrm{E}[xx^H] = \frac{E_s}{N_t}\mathrm{E}[ss^H] = \frac{E_s}{N_t}I$. Hence, in the model, $H, x$ and $n$ are mutually independent. The model also allows for the possibility of having interference in the received signal. In this disclosure, it is assumed to be included in the noise term $n$. However, in this case the covariance matrix of $n$ may no longer be proportional to an identity matrix.

Beamforming is considered using the singular value decomposition, SVD, of the channel matrix. For simplicity, we assume that $N_r \geq N_t$ which usually holds for uplink transmissions. The SVD of the channel matrix is given by

$$H = UDV^H,$$

where $U \in \mathbb{C}^{N_r \times N_r}$ and $V \in \mathbb{C}^{N_t \times N_t}$ are unitary matrices, whose columns are called the left- and right-singular vectors, respectively. The matrix $D \in \mathbb{R}^{N_r \times N_t}$ is a diagonal matrix with $N_t$ singular values $\sigma_1 \geq \sigma_2 \geq \cdots \geq \sigma_{N_t} \geq 0$ on its main diagonal in decreasing order. Beamforming of the received data $y$ from an $N_r$-dimensional space to a smaller $N_k$-dimensional space is accomplished by a multiplication with the projection matrix $W \in \mathbb{C}^{N_r \times N_k}$ via computing

$$\tilde{y} = W^H y \in \mathbb{C}^{N_k}.$$

It is considered that W consists of the principal $N_k$ left-singular vectors of $H$ (first $N_k$ columns of $U$). The resulting beamformed data therefore has the form

$$\tilde{y} = W^H y = \sqrt{G}\tilde{D}V^H x + \tilde{n},$$

where $\tilde{D} = W^H UD$ is a diagonal matrix, $\tilde{n} = W^H n$ is, in the interference-free case, a zero mean white noise vector with covariance $\mathrm{E}[\tilde{n}\tilde{n}^H] = \sigma^2 I \in \mathbb{C}^{N_k \times N_k}$. It is to be noted that, in this case also the covariance matrix of $\tilde{y}$ is diagonal since $\mathrm{E}[\tilde{y}\tilde{y}^H] = G \cdot \frac{E_s}{N_t} \cdot \mathrm{E}[\tilde{D}\tilde{D}^H] + \sigma^2 I$. However, in practice, the channel is not perfectly known and the projection matrix $W$ is constructed using an estimated $H$ (e.g. the UL channel estimate). Hence, the above analysis only holds approximately. Furthermore, in the case that there is interference, the noise, or noise plus interference, term $\tilde{n}$ will in general have a non-diagonal covariance.

In an example embodiment, with the channel model of step 303, $N_k$-dimensional received signal is generated from the transmit waveform. The received signal generated corresponds to a first antenna array with a first number, $N_k$, of receive antennas. wherein $N_k < N_r$. The received signal from the first antenna array is denoted by

$$y_l = \sqrt{G}H_l x_l + n_l \in \mathbb{C}^{N_k}$$ , where $H_l \in \mathbb{C}^{N_k \times N_t}$ is the channel matrix.

At step 304, inter-element spacings of the first antenna array are adjusted. In an example embodiment, adjusting the antenna array inter-element spacings comprises defining the first antenna array configuration in such a way that it approximately corresponds to the physical size of a second antenna array with a second number, $N_r$, of receive antennas.

The received signal being generated should be originating from a first antenna array having the same spatial dimensions as the second antenna array. In an example embodiment, if the second antenna array has $N_r$ antennas in a uniform linear grid with inter-element spacing $d$, then for the first antenna array with $N_k$ antennas, a spacing of

$$d_l = d\frac{N_r - 1}{N_k - 1}$$ is used in order to have an equally large physical array. If cross-polarized antennas are used, the formula

$$d_l = d\frac{\frac{N_r}{2} - 1}{\frac{N_k}{2} - 1}$$ is used. Furthermore, for any other array geometry, for example non-uniform spacings or a 2D-array, the first antenna array is defined so that it substantially corresponds to the physical size of the second antenna array, i.e. the array to be simulated. In some example embodiments, the spatial dimensions of the first antenna array are adjusted so that its main beam width, e.g., half-power beam width, coincides with the main beam width of the second antenna array, in which case the spatial dimensions of the first and second antenna array may differ. For example, when the first array and the second array are uniform linear arrays with isotropic elements, equal main beam widths are approximately achieved by using a spacing of $$d_l = d\frac{N_r}{N_k}$$ (instead of $$d\frac{N_r - 1}{N_k - 1}$$) for the first array. This can be derived by inspecting the array factor, whose squared magnitude describes the power gain of a signal arriving from an angle of incidence $\theta$ to the antenna array. The magnitudes of the array factors of the first array and the second array can be expressed as

$$A_1(\theta) = \frac{\sin\left(N_k \frac{\pi d_l}{\lambda} \cos(\theta)\right)}{N_k \sin\left(\frac{\pi d_l}{\lambda} \cos(\theta)\right)}$$ and $$A_2(\theta) = \frac{\sin\left(N_r \frac{\pi d}{\lambda} \cos(\theta)\right)}{N_r \sin\left(\frac{\pi d}{\lambda} \cos(\theta)\right)}$$ , respectively, where $\lambda$ denotes the carrier wavelength

and $\theta$ denotes the angle of incidence so that $$\theta = \frac{\pi}{2}$$ corresponds to broadside. Using the approximation $\sin(x) \approx x$, which

is accurate for small $x$, it follows that $$A_1 \approx \frac{\sin(\phi_1)}{\phi_1}$$ , where $$\phi_1 = N_k \frac{\pi d_l}{\lambda} \cos(\theta)$$ , and $$A_2 \approx \frac{\sin(\phi_2)}{\phi_2}$$ , where

$$\phi_2 = N_r \frac{\pi d}{\lambda} \cos(\theta)$$ . Equal half-power beam width, $$A_1^2 = A_2^2 = \frac{1}{2}$$ , is approximately obtained for an angle $\theta_0$ such that

$\phi_1 = \phi_2 \approx 0.443\pi$, and hence $\cos(\theta_0) \neq 0$. The result, $$d_l = d\frac{N_r}{N_k}$$ , follows from setting $\phi_1 = \phi_2$ and solving for $d_l$.

At step 305, the effective channel gain is adjusted. In an example embodiment, adjusting the effective channel gain comprises adjusting to approximately match the channel gain of the second antenna array. In a further example embodiment, adjusting the effective channel gain comprises adjusting the channel gain by scaling the channel matrix or noise variance by a factor depending on the first number and the second number.

The second array benefits from a larger channel gain: Consider a channel matrix H, which is normalized so

$$E\left[\|H\|_F^2\right] = E\left[\text{Tr}\left(H^H H\right)\right] = N_t N_r.$$ The channel gain, i.e. effective channel gain, is defined as follows

$$Channel\ gain = \frac{E\left[\left\|\sqrt{G}Hx\right\|^2\right]}{E[\|x\|^2]} = G\frac{E[\text{Tr}(HE[xx^H]H^H)]}{E_s} = G\frac{E[\text{Tr}(HH^H)]}{N_t} = GN_r,$$

where $$E[xx^H] = \frac{E_s}{N_t}I$$ . Hence, the channel gain depends on the number of receive antennas. For the first antenna array with $N_k < N_r$ receive antennas, the channel gain would be $GN_k$, which is smaller. Therefore, in an example embodiment, in order to have a matching channel gain to the larger array the channel matrix is scaled by a factor of $$\sqrt{N_r/N_k}$$ . In a further example embodiment, the noise variance is scaled by $\dfrac{N_k}{N_r}$ , which has an equivalent effect if the received data vector is normalized at the receiver.

At step 306, the received signal is OFDM demodulated. In a further example embodiment, the OFDM demodulation is carried out after step 307 instead.

At step 307, a decorrelation transformation to approximate beamforming is carried out. In an example embodiment, the decorrelation transformation comprises a decorrelation transformation without dimensionality reduction to approximately match the non-correlated statistics of the beamformed second antenna array.

In beamforming the data is decorrelated, i.e. its covariance becomes diagonal. In an example embodiment, the decorrelation transformation is applied in the lower dimension, i.e. for the first antenna array, as follows. Let the received signal which is generated in the lower dimension $N_k$ be denoted by $\boldsymbol{y}_l = \boldsymbol{H}_l\boldsymbol{x}_l + \boldsymbol{n}_l \in \mathbb{C}^{N_k}$ . Let the SVD of the channel matrix be $\boldsymbol{H}_l = \boldsymbol{U}_l\boldsymbol{D}_l\boldsymbol{V}_l^{\mathrm{H}}$ . Then, the data is decorrelated by computing $\widetilde{\boldsymbol{y}}_l = \boldsymbol{W}_l^{\mathrm{H}}\boldsymbol{y}_l$ , where $\boldsymbol{W}_l = \boldsymbol{U}_l$. Then the covariance matrix of $\tilde{\boldsymbol{y}}_l$, is diagonal, i.e., uncorrelated. It is to be noted that, if there is interference in the signal, then the covariance will not be exactly diagonal since then the noise plus interference covariance $\mathrm{E}[\boldsymbol{n}_l\boldsymbol{n}_l^{\mathrm{H}}]$ will not be diagonal. Furthermore, in the simulations, the channel matrix is estimated, and so the estimate of $\boldsymbol{W}_l$ is not exactly equal to $\boldsymbol{U}_l$ causing the decorrelation transformation to be imperfect. However, the approach according to example embodiments provides a substantially accurate approximation.

At step 308, a forward pass is calculated for the machine learning receiver model which is being trained with the generated received data, denoted above by $\boldsymbol{y}_l$.

At step 309, a loss calculation is carried out. In an example embodiment, the loss calculation comprises a calculation of binary entropy between the transmit bit sequence and the bit sequence detected by the ML receiver model.

At step 310, the ML receiver model parameters are updated based on the training carried out with the generated received signal. In an example embodiment, the parameters are updated based on a stochastic gradient descent-based training process.

At step 311, the ML receiver model parameters have been updated, and will be used in subsequent applying of the receiver model.

At step 312, it is checked whether the training has been completed. In an example embodiment, completing the training requires numerous training runs, for example from 200 000 to one million runs. If the training has not been completed, steps 301 to 311 are repeated.

At step 313, as the training has been completed, the updated parameters, i.e. the parameters the model has learned with the completed training, are output to be used in a receiver.

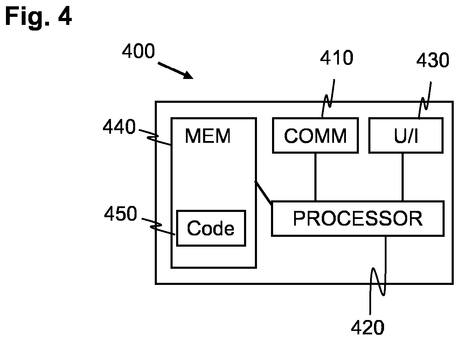

Fig. 4 shows a block diagram of an apparatus 400 according to an example embodiment. The apparatus 400 may operate as an apparatus of any example embodiment. In an example embodiment, the apparatus 400 may operate as a machine learning receiver, such as DeepRx receiver. The apparatus 400 generally comprises a memory 440 including a computer program code 450. The apparatus 400 further comprises a processor 420 for controlling the operation of the apparatus 400 using the computer program code 450 to cause the apparatus to carry out method steps of example embodiments, and a communication unit 410 for communicating with other network entities and other devices, and in some example embodiments a user interface unit 430 for interacting with a user.

The communication unit 410 comprises, for example, one or more of: a local area network (LAN) port; a wireless local area network (WLAN) unit; Bluetooth unit; cellular data communication unit; or satellite data communication unit. The communication interface 410 may support one or more different communication technologies. The communication interface 410 may support Ethernet communications and/or IP based communications. The apparatus 400 may also or alternatively comprise more than one of the communication interfaces 410. The processor 420 comprises, for example, any one or more of: a master control unit (MCU); a microprocessor; a digital signal processor (DSP); an application specific integrated circuit (ASIC); a field programmable gate array; and a microcontroller. Various parts may be implemented using more than one corresponding or different elements, such as memories and storages may be multiplied for capacity and/or redundancy purposes. Similarly, processing and/or communications may be implemented with multiple parallel or elements for capacity and/or redundancy purposes.

The computer program code 450 may control the apparatus 400 to provide one or more example embodiments of present disclosure, such as suitable parts of Figs. 1-3.

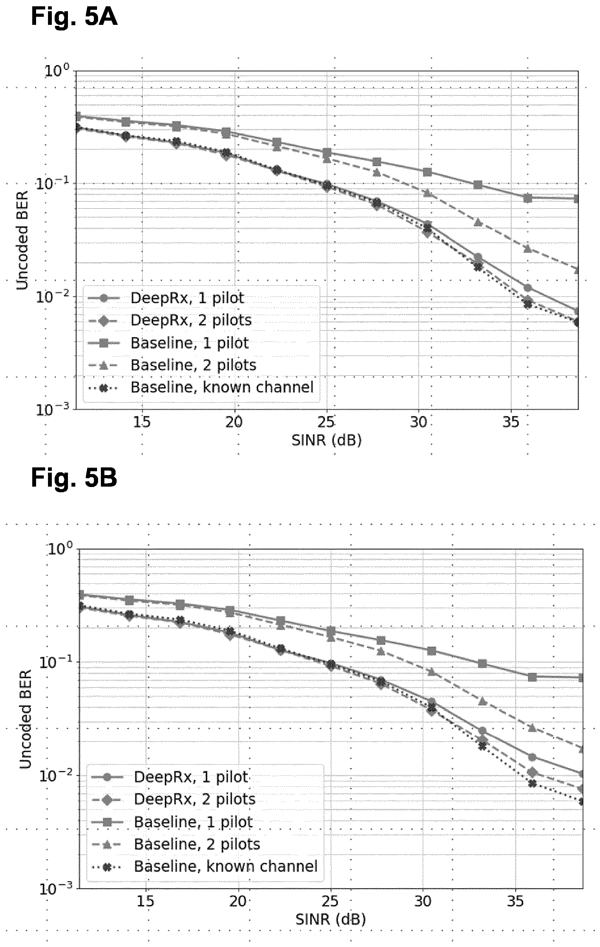

Fig. 5A shows a result graph of a configuration trained with an approximation of an example embodiment and Fig 5B shows a result graph of a configuration trained without approximation. Figs. 5A and 5B show results of a simulated MIMO link with 4 transmit antennas and 64 receive antennas beamformed to 8 beams using 256 Quadrature Amplitude Modulation, QAM, Clustered Delay Line, CDL, channel models and a simple interference model. The received data contains both noise and interference. Two DeepRx MIMO models were trained. The baseline shown in Figs. 5A and 5B comprises a Linear Minimum Mean Square Error, LMMSE, receiver. The vertical axis of Figs. 5A and 5B shows uncoded Bit Error Rate, BER, and the horizontal axis shows Signal to Interference plus Noise Ratio, SINR.

Fig 5A shows the result of training and validation using data according to example embodiments of the present disclosure to approximately simulate the beamforming using an array of $N_k$ = 8 antennas.

Fig. 5B shows the result of training by implementing full beamforming from 64 antennas to 8 antennas. The algorithm was run during training and validation without any approximation.

In both Fig. 5A and Fig. 5B, the beamforming matrix was computed from an estimated channel matrix. Both trained models were validated with beamforming data without approximation as shown in Figs. 5A and 5B. The DeepRx model trained according to example embodiments of the present disclosure is at least as good as the model trained without approximation, which supports the validity of the example embodiments of the present disclosure.

Without in any way limiting the scope, interpretation, or application of the claims appearing below, technical effects of one or more of the example embodiments disclosed herein are described in the following.

Machine learning and artificial intelligence are visioned as key components of 6G wireless networks. When training machine learning algorithms for higher-order MIMO receivers, one bottleneck is the memory requirements. Simulating training data for a high number of antennas may be unfeasible due to limited memory or can result in very long training times. Since at the receiver end, the antennas need to be beamformed to a smaller dimensionality, it is desirable to be able to directly simulate already beamformed lower dimensional data and use that in the training phase of a machine learning receiver. This speeds up the simulation time as well as considerably reduces the memory requirements. Therefore, example embodiments of the present disclosure provide for generating artificial training data, which approximately models the effect of receiver beamforming.

The example embodiments of the present disclosure provide for generating data that imitates beamformed data from a large antenna array, even though only the small number of beamformed dimensions are simulated. With the example embodiments of the present disclosure, the distribution of the generated received signal is substantially corresponding to a full beamforming so that the performance of the machine learning receiver model is the same for both training datasets.

Accordingly, a technical effect of one or more of the example embodiments disclosed herein is that training of a machine learning receiver is accelerated. Another technical effect of one or more of the example embodiments disclosed herein is reduction of memory needed. Another technical effect of one or more of the example embodiments disclosed herein is the provision of a training data generation that is easy to implement in existing systems. Another technical effect of one or more of the example embodiments disclosed herein is the provision of accurate approximation of beamformed data from a large antenna array.

As used in this application, the term "circuitry" may refer to one or more or all of the following:

(a) hardware-only circuit implementations (such as implementations in only analogue and/or digital circuitry) and;
(b) combinations of hardware circuits and software, such as (as applicable):

(i) a combination of analogue and/or digital hardware circuit(s) with software/firmware; and
(ii) any portions of hardware processor(s) with software (including digital signal processor(s)), software, and memory(ies) that work together to cause an apparatus, such as a receiver or a machine learning model, to perform various functions); and

(c) hardware circuit(s) and / or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a server, a cellular network device, or other computing or network device.

As used herein, "at least one of the following:" and "at least one of" and similar wording, where the list of two or more elements are joined by "and" or "or", mean at least any one of the elements, or at least any two or more of the elements, or at least all the elements.

Embodiments may be implemented in software, hardware, application logic or a combination of software, hardware, and application logic. The software, application logic and/or hardware may reside on a receiver, a further network device, or a server. If desired, part of the software, application logic and/or hardware may reside on a receiver, part

**EP 4 683 241 A1**

of the software, application logic and/or hardware may reside on a further network device, and part of the software, application logic and/or hardware may reside on a server. In an example embodiment, the application logic, software, or an instruction set is maintained on any one of various conventional computer-readable media. In the context of this document, a "computer-readable medium" may be any non-transitory media or means that can contain, store, communicate, propagate, or transport the instructions for use by or in connection with an instruction execution system, apparatus, or device, such as a computer, with one example of a computer described and depicted in Fig. 4. A computer-readable medium may comprise a computer-readable storage medium that may be any media or means that can contain or store the instructions for use by or in connection with an instruction execution system, apparatus, or device, such as a computer. The term non-transitory as used herein is a limitation of the medium itself (i.e., tangible, not a signal) as opposed to a limitation on data storage persistency (e.g., random access memory vs. read only memory).

Example embodiments of present disclosure may be applied in 5G or 6G network technologies, for example. It is however to be noted that various example embodiments of present disclosure may be equally applied to other mobile networks and radio communication technologies (e.g. future technologies or earlier technologies). An example of applicable network technologies is 5G-Advanced, which corresponds to 3GPP Release 18 and beyond.

Any foregoing memory medium may comprise a digital data storage such as a data disc or diskette, optical storage, magnetic storage, holographic storage, optomagnetic storage, phase-change memory, resistive random access memory, magnetic random access memory, solid-electrolyte memory, ferroelectric random access memory, organic memory or polymer memory. The memory medium may be formed into a device without other substantial functions than storing memory or it may be formed as part of a device with other functions, including but not limited to a memory of a computer, a chip set, and a sub assembly of an electronic device.

If desired, the different functions discussed herein may be performed in a different order and/or concurrently with each other. Furthermore, if desired, one or more of the before-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the foregoing describes example embodiments of the invention, these descriptions should not be viewed in a limiting sense. Rather, there are several variations and modifications which may be made without departing from the scope as defined in the appended claims.

**Claims**

1.  A method, comprising
    generating (102) from a transmit waveform a received signal corresponding to a first antenna array with a first number of receive antennas, wherein the generated received signal substantially corresponds to a received signal of a second antenna array with a second number of receive antennas, wherein the first number is smaller than the second number by carrying out at least one of the following:

    adjusting (103) first antenna array inter-element spacings,
    adjusting (104) effective channel gain, and
    carrying out (105) a decorrelation transformation to approximate beamforming, wherein carrying out the decorrelation transformation to approximate beamforming comprises a decorrelation transformation without dimensionality reduction to approximately match the non-correlated statistics of the beamformed second antenna array.

2.  The method of claim 1, further comprising

    producing a random transmit bit sequence; and
    generating the transmit waveform based on the random transmit bit sequence.

3.  The method of claim 1, further comprising orthogonal frequency division multiplexing, OFDM, demodulation of the received signal.

4.  The method of claim 1, further comprising inputting the received signal into a machine learning receiver model for a forward pass followed by a loss calculation.

5.  The method of claim 4, further comprising updating parameters of the machine learning receiver model based on the loss calculation.

6. The method of claim 1, wherein adjusting the antenna array inter-element spacings comprises defining the first antenna array configuration in such a way that it approximately corresponds to the physical size of the second antenna array.

7. The method of claim 6, wherein the second antenna array comprises a uniform antenna array and adjusting the first antenna array inter-element spacings comprises defining the first antenna array in a uniform configuration with substantially even inter-element spacings in such a way that it approximately corresponds to the physical size of the second antenna array.

8. The method of claim 6, wherein the second antenna array comprises a non-uniform antenna array and adjusting the first antenna array inter-element spacings comprises defining the first antenna array in a non-uniform configuration in such a way that it approximately corresponds to the physical size of the second antenna array.

9. The method of claim 1, wherein adjusting the effective channel gain comprises adjusting to approximately match the channel gain of the second antenna array.

10. The method of claim 9, wherein adjusting the effective channel gain comprises adjusting the channel gain by scaling the channel matrix or noise variance by a factor depending on the first numberand the second number.

11. An apparatus (400), comprising:

at least one processor (420); and
at least one memory (440) including instructions that, when executed by the at least one processor, cause the apparatus at least to:
generate (102) from a transmit waveform a received signal corresponding to a first antenna array with a first number of receive antennas, wherein the generated received signal substantially corresponds to a received signal of a second antenna array with a second number of receive antennas, wherein the first number is smaller than the second number by carrying out at least one of the following:

adjust (103) first antenna array inter-element spacings,
adjust (104) effective channel gain, and
carry out (105) a decorrelation transformation to approximate beamforming, wherein carrying out the decorrelation transformation to approximate beamforming comprises a decorrelation transformation without dimensionality reduction to approximately match the non-correlated statistics of the beamformed second antenna array.

12. The apparatus of claim 11, wherein the at least one processor; and the at least one memory are further configured to cause the apparatus at least to

produce a random transmit bit sequence; and
generate the transmit waveform based on the random transmit bit sequence.

13. The apparatus of claim 11, wherein the at least one processor; and the at least one memory are further configured to cause the apparatus at least to

input the received signal into a machine learning receiver model for a forward pass followed by a loss calculation; and
update parameters of the machine learning receiver model based on the loss calculation.

14. The apparatus of claim 11, wherein adjusting the antenna array inter-element spacings comprises defining the first antenna array configuration in such a way that it approximately corresponds to the physical size of the second antenna array, wherein adjusting the effective channel gain comprises adjusting to approximately match the channel gain of the second antenna array, and wherein adjusting the effective channel gain comprises adjusting the channel gain by scaling the channel matrix or noise variance by a factor depending on the first number and the second number.

15. A non-transitory computer readable medium comprising program instructions stored thereon for performing at least the following:
generate (102) from a transmit waveform a received signal corresponding to a first antenna array with a first number of receive antennas, wherein the generated received signal substantially corresponds to a received signal of a second antenna array with a second number of receive antennas, wherein the first number is smaller than the second number by carrying out at least one of the following:

adjust (103) first antenna array inter-element spacings,
adjust (104) effective channel gain, and
carry out (105) a decorrelation transformation to approximate beamforming, wherein carrying out the decorrelation transformation to approximate beamforming comprises a decorrelation transformation without dimensionality reduction to approximately match the non-correlated statistics of the beamformed second antenna array.

**Fig. 1**

| 101. Transmit waveform |
|---|

| 102. Generate received signal |
|---|
| 103. Adjust spacing |
| 104. Adjust gain |
| 105. Decorrelation transformation |

| 106. Received signal for first array corresponding to second array |
|---|

# Fig. 2

201. Transmit bit sequence

202. Generate transmit waveform

203. Generate received signal

204. Input received signal to ML receiver model

205. Forward pass

206. Loss calculation

207. Update ML parameters

# Fig. 3

```
┌─────────────────┐          ┌─────────────────┐
│ 301. Transmit   │─────────▶│ 302.Transmit    │◀──────────┐
│ bits            │          │ waveform        │           │
└─────────────────┘          └─────────────────┘           │
        │                            │                     │
        │                            ▼                      │
┌─────────────────┐          ┌─────────────────┐   ┌──────────────────┐
│ 305. Gain       │─────────▶│ 303. Channel    │◀──│ 304. Element     │
│ adjustment      │          │                 │   │ spacing          │
└─────────────────┘          └─────────────────┘   └──────────────────┘
        │                            │
        │                            ▼
        │                    ┌─────────────────┐
        │                    │ 306.            │
        │                    │ Demodulation    │
        │                    └─────────────────┘
        │                            │
        │                            ▼
        │                    ┌─────────────────┐
        │                    │ 307.            │
        │                    │ Decorrelation   │
        │                    │ transformation  │
        │                    └─────────────────┘
        │                            │
        │                            ▼
        │                    ┌─────────────────┐        ╭─────────────╮
        │                    │ 308. Model      │◀───────│ 311. Model  │◀──┐
        │                    │ forward pass    │        │ parameters  │   │
        │                    └─────────────────┘        ╰─────────────╯   │
        │                            │                         ▲          │
        │                            ▼                         │          │
        │                    ┌─────────────────┐        ┌──────────────┐  │
        └───────────────────▶│ 309. Loss       │───────▶│ 310. Update  │  │
                             │ calculation     │        │ model        │  │
                             └─────────────────┘        │ parameters   │  │
                                     │                  └──────────────┘  │
                                     ▼                                    │
                                 ╱───────╲           ┌──────────────┐     │
                                ╱ 312.Co  ╲   Yes    │ 313. Output  │     │
                               ╱ mpleted   ╲────────▶│ learned      │◀────┘
                               ╲  ?        ╱         │ parameters   │
                                ╲─────────╱          └──────────────┘
                                     │
                                    No
```

# Fig. 4

## Fig. 5A

## Fig. 5B

**EP 4 683 241 A1**

EUROPEAN SEARCH REPORT

Application Number

EP 25 18 9483

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/376956 A1 (WESEMANN STEFAN [DE] ET AL) 24 November 2022 (2022-11-24) <br> * paragraph [0082] - paragraph [0106] * <br> * paragraph [0117] - paragraph [0124] * <br> * paragraph [0131] - paragraph [0143] * <br> * figures 1-15 * <br> ----- | 1-15 | INV. <br> H04B7/06 |

TECHNICAL FIELDS SEARCHED (IPC)

H04B

The present search report has been drawn up for all claims

| Place of search | Date of completion of the search | Examiner |
|---|---|---|
| Munich | 22 October 2025 | Spinnler, Florian |

EPO FORM 1503 03.82 (P04C01)

**EP 4 683 241 A1**

## ANNEX TO THE EUROPEAN SEARCH REPORT
## ON EUROPEAN PATENT APPLICATION NO.

EP 25 18 9483

This annex lists the patent family members relating to the patent documents cited in the above-mentioned European search report.
The members are as contained in the European Patent Office EDP file on
The European Patent Office is in no way liable for these particulars which are merely given for the purpose of information.

22-10-2025

| Patent document cited in search report | | Publication date | Patent family member(s) | | Publication date |
|---|---|---|---|---|---|
| US 2022376956 | A1 | 24-11-2022 | CN | 114073021 A | 18-02-2022 |
| | | | EP | 3994811 A1 | 11-05-2022 |
| | | | JP | 7412461 B2 | 12-01-2024 |
| | | | JP | 2022539163 A | 07-09-2022 |
| | | | KR | 20220019828 A | 17-02-2022 |
| | | | US | 2022376956 A1 | 24-11-2022 |
| | | | WO | 2021001032 A1 | 07-01-2021 |

For more details about this annex : see Official Journal of the European Patent Office, No. 12/82